Europäisches Patentamt

European Patent Office

Office européen des brevets

(11) Veröffentlichungsnummer: **0 118 923**

**A2**

## (12) EUROPÄISCHE PATENTANMELDUNG

(21) Anmeldenummer: **84102746.9**

(22) Anmeldetag: **14.03.84**

(51) Int. Cl.³: **B 60 R 3/02**

(30) Priorität: **14.03.83 DE 3309039**

(43) Veröffentlichungstag der Anmeldung:
**19.09.84 Patentblatt 84/38**

(84) Benannte Vertragsstaaten:
**AT BE CH DE FR GB IT LI LU NL SE**

(71) Anmelder: **Heinrich Bald Fahrzeugfabrik GmbH & Co.**
**Leimbachstrasse 117-119**
**D-5900 Siegen(DE)**

(72) Erfinder: **Deller, Johannes**
**Johannlandstrasse 42**
**D-5902 Netphen 3(DE)**

(72) Erfinder: **Wehn, Helmut**
**Hermann-Löns-Strasse 13**
**D-5901 Wilnsdorf-Wilden(DE)**

(74) Vertreter: **Müller, Gerd et al,**
**Patentanwälte F.W. Hemmerich Gerd Müller, Dipl.-Ing. D.**
**Grosse Felix Pollmeier Hammerstrasse 2**
**D-5900 Siegen 1(DE)**

(54) **Ausfahrbare Trittstufe für Kraftfahrzeuge oder dergleichen.**

(57) Eine ausfahrbare Trittstufe 3 für Kraftfahrzeuge oder dergleichen wird so ausgebildet, daß sie durch eine Kraftantriebsvorrichtung schnell und zügig verstellt werden kann, ohne daß beim Erreichen der jeweiligen Endstellung starke Belastungsstöße auftreten. Sie ist am vorderen Ende zweier z. B. im Querschnitt U- oder C-förmiger, Profilschienen 15 und 16 angeordnet und wird mittels dieser auf ortsfest gelagerten Laufrollen 12 quer zu ihrer Längsrichtung verfahrbar abgestützt und geführt. Auf die Trittstufe 3 wirkt eine ortsfest verankerte Kraftantriebsvorrichtung 23 mit Linearbewegung ein.

An jeder Profilschiene 15, 16 greift eine Zugfeder 20, 21 mit sich im wesentlichen quer zur Verstellrichtung der Trittstufe 3 erstreckender Wirkrichtung an. Die ortsfesten Widerlager 8 für die Zugfedern 20 und 21 haben dabei relativ zum Verstellweg der Trittstufe 3 eine Anordnung bei welcher die Zugfedern 20 und 21 in jeder der beiden Endstellungen der Trittstufe 3 eine gegen deren Verstellrichtung spitzwinklig geneigte Lage einnehmen. Die Kraftantriebsvorrichtung 23 besteht aus einem Schubspindelantrieb mit diesen umgebenden, elektrischen Getriebemotor und sie ist auf der Mittel- bzw. Symmetrieebene zu den beiden Profilschienen 15, 16 wirksam, während die ortsfest verankerten Enden der Zugfedern 20 und 21 der Mittel- bzw. Symmetrieebene näherliegen als deren an den Profilschienen 15 und 16 angreifendes Ende.

Fig. 1

- 1 -

Ausfahrbare Trittstufe für Kraftfahrzeuge oder dergleichen

Die Erfindung betrifft eine ausfahrbare Trittstufe für Kraftfahrzeuge oder dergleichen, die am vorderen Ende zweier im Querschnitt U- oder C-förmiger Profilschienen sitzt und mittels dieser auf ortsfest gelagerten Laufrollen quer zu ihrer Längsrichtung verfahrbar abgestützt und geführt ist, wobei an der Trittstufe eine ortsfest verankerte Kraftantriebsvorrichtung mit Linearbewegung angreift.

Es ist bekannt, Kraftfahrzeuge im Bereich von Einstiegstüren, und zwar insbesondere längsseitig angeordneten Schiebetüren, mit einer ausfahrbaren Trittstufe auszurüsten, um dort die Einstiegshöhe zu vermindern. Wesentliches Kriterium ist dabei, daß die ausfahrbare Trittstufe über die Ebene der mit der Einstiegstür ausgerüsteten Karosseriewand hinausragt, wenn die Einstiegstür geöffnet ist, jedoch hinter die Ebene der betreffenden Karosseriewand zurückgestellt wird, sobald die Einstiegstür in die Verschlußstellung gelangt.

Diese Funktionsweise der ausfahrbaren Trittstufe wird von einem mit der betreffenden Einstiegstür zusammenarbeitenden Kontaktschalter gesteuert, der eine Kraftantriebsvorrichtung mit Linearbewegung betätigt, derart, daß diese eine zur jeweiligen Bewegungsrichtung der Einstiegstür konforme Antriebsbewegung hervorbringt, also das Ausfahren der Trittstufe einleitet, sobald der Öffnungsvorgang der Einstiegstür beginnt, umgekehrt aber die Rückstellbewegung

- 2 -

für die Trittstufe veranlaßt, wenn die Einstiegstür geschlossen wird bzw. ist.

Diese Arbeitsweise der ausfahrbaren Trittstufe in Verbindung mit Kraftfahrzeugen oder dergleichen ist immer dann notwendig, wenn sie einer Einstiegstür, insbesondere Schiebetür, zugeordnet wird, die sich in einer seitlichen Längswand der Karosserie befindet, weil das Kraftfahrzeug aus Sicherheitsgründen nur in Fahrt gesetzt werden darf, nachdem die ausfahrbare Trittstufe in ihre Ruhestellung zurückgebracht ist, in welcher sie nicht mehr über die seitlichen Begrenzungslinien der Karosseriewand vorsteht.

Besonders bei solchen Kraftfahrzeugen, die mit kleiner bis mittlerer Sitzkapazität für den Personentransport im Haltestellenverkehr benutzt werden oder auch als Einsatzfahrzeuge der Polizei dienen, ist es zur Gewährleistung der Betriebssicherheit notwendig, daß jeder Betriebszyklus der ausfahrbaren Trittstufe möglichst schnell und zügig, jedoch trotzdem stoßfrei und sicher abläuft.

Die praktische Erfahrung hat gezeigt, daß die bisher zum Einsatz gelangten ausfahrbaren Trittstufen der gattungsgemäßen Art für Kraftfahrzeuge oder dergleichen diese letzterwähnten Sicherheitsanforderungen nur unzureichend erfüllen und daher nicht in allen Fällen benutzt werden können. Diese Unzulänglichkeiten beruhen in erster Linie darauf, daß in jedem Bewegungszyklus der ausfahrbaren Trittstufe einerseits das Anlaufen der Kraftantriebsvorrichtung mit Linearbewegung aus dem Zustand der Ruhe bis auf maximale Stellgeschwindigkeit eine relativ lange Zeit

- 3 -

benötigt, während andererseits deren Stellvorgang am
Ende jedes Bewegungszyklus' abrupt gestoppt wird.

Diese unzulängliche Arbeitsweise der bekannten ausfahrbaren Trittstufen stellt sich dabei ein, unabhängig davon, ob es sich bei der Kraftantriebsvorrichtung mit
Linearbewegung um eine pneumatische, hydraulische oder
hydropneumatische Koben-Zylinder-Einheit handelt, oder
aber ob ein elektrisch betriebener Hubantrieb benutzt
wird.

Durch den jeweiligen Endstellungen der ausfahrbaren Trittstufe zugeordnete, elastische Pufferglieder kann zwar
das abrupte Stillsetzen des jeweiligen Bewegungszyklus'
der Trittstufe gemildert bzw. gedämpft werden. Es hat
sich jedoch im praktischen Betrieb herausgestellt, daß
sich durch die in der Endphase jedes Betriebszyklus'
einander entgegengerichtete Kraftwirkungen zwischen den
Puffergliedern und der Kraftantriebsvorrichtung an der
letzteren Klemmwirkungen einstellen können, die ihr Anlaufen für den nächsten Bewegungszyklus verhindern oder
zumindest erschweren und damit beträchtlich verzögern.

Zweck der Erfindung ist es, die Nachteile der ausfahrbaren Trittstufen bekannter Art zu beseitigen. Daher ist
der Erfindung das Ziel gesetzt, eine ausfahrbare Trittstufe der gattungsgemäßen Art für Kraftfahrzeuge oder
dergleichen zu schaffen, bei der im praktischen Betrieb
während jedes Betriebszyklus' die Anlaufträgheit der
Kraftantriebsvorrichtung wesentlich verringert sowie
deren Stellgeschwindigkeit erhöht, zugleich aber das
Bremsverhalten zur Beendigung jedes Bewegungszyklus' be-

- 4 -

trächtlich verbessert ist.

Die Lösung dieser Aufgabe wird erfindungsgemäß erreicht
durch die im Kennzeichen des Anspruchs 1 angegebenen
Merkmale.

Es hat sich gezeigt, daß durch eine solche Ausgestaltung
der ausfahrbaren Trittstufe jeder Bewegungszyklus' innerhalb eines Zeitraums von etwa 2,5 Sekunden ablaufen kann,
und daß dabei sowohl Anlaufschwierigkeiten der Kraftantriebsvorrichtung vermieden als auch abrupte Anschlagstöße am Ende der Bewegungszyklen verhindert werden können.

Durch die erfindungsgemäßen Weiterbildungsmaßnahmen nach
Anspruch 2 ist ein relativ einfacher Aufbau der ausfahrbaren Trittstufe unter Aufrechterhaltung ihrer sicheren
Wirkungsweise auch dann erreichbar, wenn sie mit relativ
großer Baulänge vorgesehen werden muß.

Bewährt im praktischen Einsatz haben sich auch die Merkmale des Anspruchs 3, weil hierdurch das Zusammenwirken
der Trittstufe über ihre Profilschiene mit den Laufrollen
optimiert und zumindest in den beiden möglichen Endstellungen der Trittstufe das Bewegungsspiel zwischen den
Profilschienen und den Laufrollen weitgehend ausgeschaltet
wird. Die aus einem solchen Spiel resultierenden Klappergeräusche, insbesondere beim Fahrbetrieb der Kraftfahrzeuge oder dergleichen, können hierdurch unterbunden werden.

Die im Anspruch 4 angegebenen Erfindungsmerkmale sind ge-

- 5 -

eignet, mit einfachen Mitteln den maximalen Stellweg
der ausfahrbaren Trittstufe für jeden Bewegungszyklus
sicher einzugrenzen und gegebenenfalls auch zu justieren.

Ein problemloser und sicherer Einbau einer ausfahrbaren
Trittstufe nach der Erfindung wird - gegebenenfalls auch
nachträglich noch - ermöglicht, sofern die im Anspruch 5
angegebenen Merkmale benutzt sind.

Der Gebrauchswert für eine ausfahrbare Trittstufe läßt
sich erfindungsgemäß noch dadurch erhöhen, daß die Maßnahmen nach Anspruch 6 zum Einsatz gelangen, weil hierdurch auf einfache und sichere Art und Weise funktionshemmende Verschmutzungen, die im Fahrbetrieb von Kraftfahrzeugen oder dergleichen unvermeidbar sind, von der
Kraftantriebsvorrichtung ferngehalten werden. Auch das
im Anspruch 7 angegebene Merkmal der Erfindung ist in
diesem Zusammenhang durchaus bedeutsam, weil hierdurch
auch die die Funktion der Kraftantriebsvorrichtung unterstützenden Kraftspeicherorgane vor Funktionsbeeinträchtigungen durch Schmutz geschützt werden können.

Eine andere wichtige Ausbildungsmaßnahme für eine ausfahrbare Trittstufe nach der Erfindung ist im Anspruch
8 angegeben. Sie stellt sicher, daß nicht nur das Anlaufverhalten der Kraftantriebsvorrichtung zu Beginn
jedes Bewegungszyklus' sondern auch deren Auslaufverhalten am Ende jedes Bewegungszyklus' so beeinflußt
wird, daß sich Hemmnisse, die das Betriebsverhalten
beeinträchtigen, nicht einstellen können.

- 6 -

In ganz besonderer Weise hat es sich für eine ausfahrbare Trittstufe mit den erfindungsgemäßen Ausbildungsmerkmalen bewährt, wenn die Kraftantreibsvorrichtung
mit Linearbewegung eine Ausgestaltung erhält, wie sie
durch die Merkmale des Anspruchs 9 bestimmt ist. Es
ergibt sich hierdurch bei kompaktem Aufbau der Kraftantriebsvorrichtung eine betriebssichere Arbeitsweise mit
hoher Stellgeschwindigkeit, gleichmäßigem Bewegungsverlauf und selbstsperrender Wirkung.

Schließlich ist es nach der Erfindung auch noch besonders wichtig, die Merkmale des Anspruchs 10 in Verbindung mit einer ausfahrbaren Trittstufe nach der Erfindung zu benutzen, weil hierdurch nicht nur der Gesamtaufbau für die ausfahrbare Trittstufe montagetechnisch
vereinfacht, sondern auch in seiner Wirkungsweise optimiert werden kann. Eine Beeinträchtigung in der Funktionsweise der Kraftantriebsvorrichtung durch äußere Einflüsse kann ferner wesentlich verringert werden.

Kraftantriebsvorrichtungen, die als Linearantriebseinheiten ausgebildet sind und einen Aufbau haben, der den
Merkmalen der Ansprüche 9 und 10 zumindest ähnlich ist,
sind an sich bekannt durch das DE-GM 81 33 271.

Weitere Merkmale und Vorteile des Gegenstandes der Erfindung werden nachfolgend anhand einer Zeichnung ausführlich erläutert. Hierbei zeigt

Figur 1   eine Draufsicht auf eine ausfahrbare Trittstufe für Kraftfahrzeuge oder dergleichen in ihrer
          zurückgezogenen bzw. eingefahrenen Stellung,

- 7 -

Figur 2    die ausfahrbare Trittstufe von vorne in Pfeilrichtung II der Fig. 1 gesehen,

Figur 3    eine Ansicht der ausfahrbaren Trittstufe in Pfeilrichtung III der Fig. 1,

Figur 4    einen Schnitt entlang der Linie IV-IV durch die
Trittstufe nach Fig. 1,

Figur 5    eine der Fig. 1 entsprechende Darstellung der
ausfahrbaren Trittstufe, jedoch in ihrer ausgefahrenen Endstellung,

Figur 6    eine der Fig. 3 entsprechende Seitenansicht,
jedoch auf die ausfahrbare Trittstufe in der
Stellung nach Fig. 5,

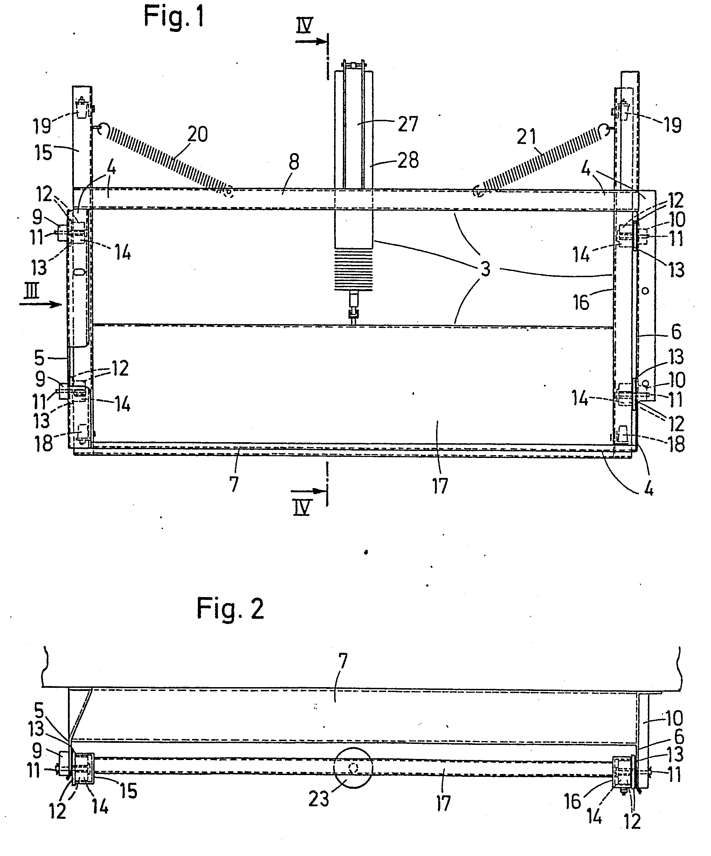

Figur 7    in größerem Maßstab einen Längsschnitt durch
die Kraftantriebsvorrichtung in Linearbewegung
zum Antrieb der ausfahrbaren Trittstufe nach den
Fig. 1 bis 6, und

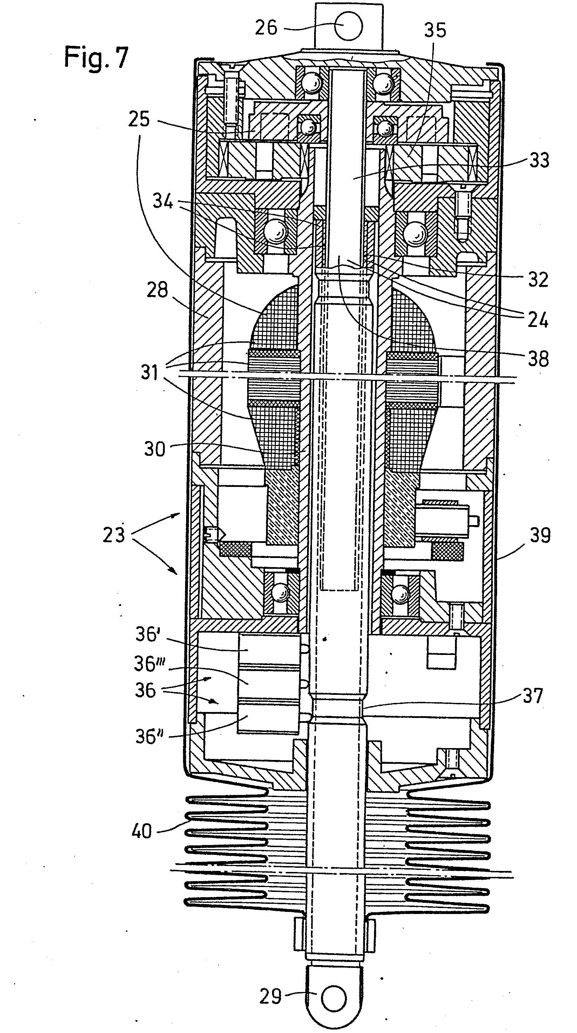

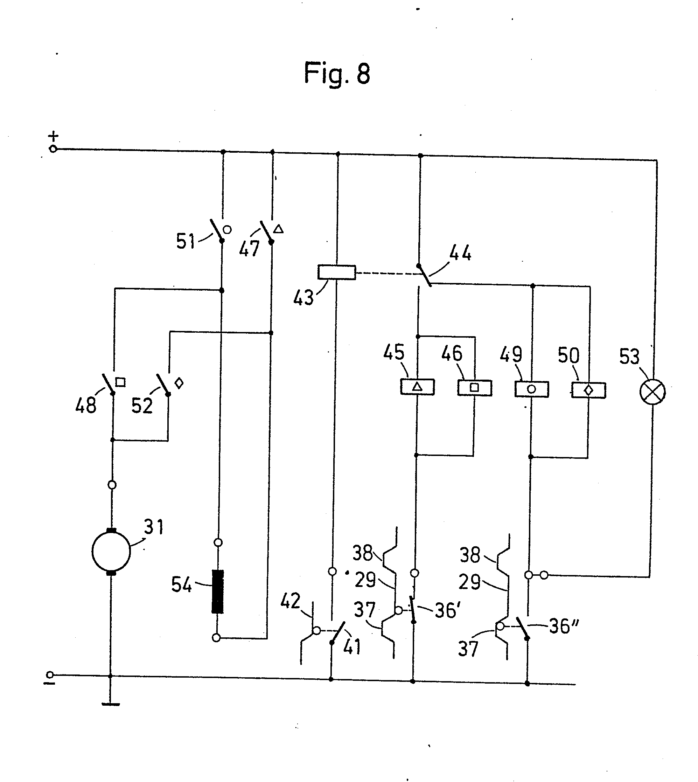

Figur 8    eine Schaltungsanordnung zur Steuerung der Kraftantriebsvorrichtung nach Fig. 7 für die ausfahrbare Trittstufe nach den Fig. 1 bis 6.

In den Fig. 2, 3 und 6 der Zeichnung ist jeweils der Tür-
schweller-Bereich 1 an einer seitlichen Längswand eines
Kraftfahrzeuges oder dergleichen angedeutet. Oberhalb des
Türschweller-Bereichs 1 befindet sich in der Längswand
des Kraftfahrzeuges oder dergleichen eine Einstiegsöffnung 2, die durch eine insbesondere als Schiebetür aus-

- 8 -

gebildete, Einstiegstür wahlweise freigegeben oder verschlossen werden kann. Die Einstiegstür ist dabei der Einfachheit halber nicht dargestellt.

Damit die Einstiegshöhe im Bereich der Einstiegsöffnung 2 zur Fahrbahn hin verringert und demzufolge das Ein- und Aussteigen von Personen erleichtert werden kann, wird unterhalb des Türschwellers 1 am Fahrzeugboden und/oder -rahmen eine ausfahrbare Trittstufe montiert, die in den Fig. 1 bis 6 insgesamt mit 3 bezeichnet wird.

Zur Verbindung mit dem Kraftfahrzeug oder dergleichen dient ein Befestigungsrahmen 4, der zwei Längsholme 5 und 6 sowie zwei diese miteinander verbindende Querholme 7 und 8 aufweist.

Die beiden Längsholme 5 und 6 sowie der Querholm 7 werden von durch Abkantungen und Anbiegungen versteifte Blechzuschnitte gebildet, während als Querholm 8 ein Hohlprofil, bspw. in Form eines hochkant stehenden Reckteckrohres Verwendung findet.

Die beiden Längsholme 5 und 6 sind jeweils durch zwei außenseitig aufgeschweißte, massive Stege 9 und 10 stabilisiert, in deren Bereich um ortsfeste, horizontale Achsen 11 jeweils eine Laufrolle 12 drehbar gelagert ist.

Alle vier Laufrollen 12 sind dabei an ihrem den als Laufrollenträger wirkenden Längsholmen 5 und 6 zugewendeten Ende mit einem Bund oder Spurkranz 13 ausgerüstet, der einen beträchtlich größeren Durchmesser aufweist, als der übrige, nach der Innenseite des Rahmens gerichtete Teil 14 der Laufrollen 12.

- 9 -

Jeweils die beiden an einem Längsholm 5 oder 6 gelagerten Laufrollen 12 dienen zur Abstützung und Führung einer im Querschnitt U- oder C-förmigen Profilschiene 15 bzw. 16, indem sie mit ihrem den kleineren Durchmesser aufweisenden Teil 14 in die auswärts gerichteten, offenen Längsseiten der Profilschienen 15 und 16 eingreifen, wie das aus den Fig. 1, 2 und 6 deutlich zu sehen ist.

Die vorderen Endbereiche der beiden Profilschienen 15 und 16 sind miteinander durch den eigentlichen Fußaufauftritt 17 fest und starr miteinander verbunden, welcher bzw. aus einem nach unten offenen, flachen C-Profil gebildet ist und vorzugsweise eine durch hochgeprägte sowie gelochte Noppen bzw. Hälse gebildete, aufgerauhte Auftrittsfläche hat.

Die Breite des eigentlichen Fußauftritts 17 ist genügend groß bemessen, um eine standsichere Auftrittsfläche zu bilden. Seine Breite entspricht vorzugsweise etwa einem Drittel der Gesamtlänge der beiden Profilschienen 15 und 16, die zu seiner Führung und Halterung dienen. Die Länge der nach hinten über den Fußauftritt 17 hinausragenden Teilstücke der Profilschienen 15 und 16 wird so ausgelegt, daß sie in jedem Falle dem Abstand zwischen den an den Längsholmen 5 und 6 hintereinander angeordneten Laufrollen 12 entspricht.

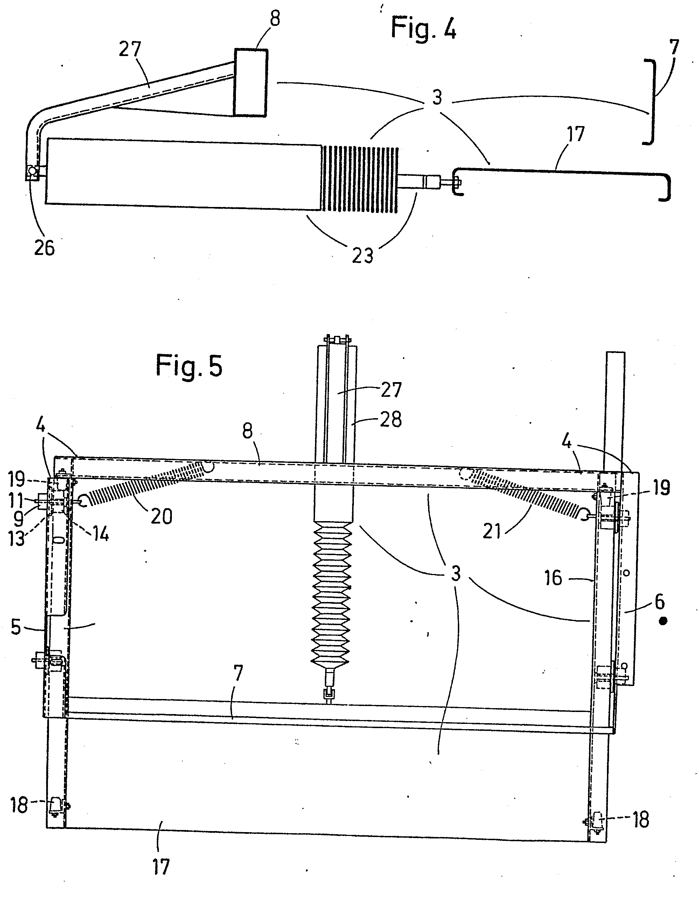

Die Länge der Längsholme 5 und 6 des Befestigungsrahmens 4 bzw. der Abstand zwischen seinen Querholmen 7 und 8 wird vorzugsweise so ausgelegt, daß sie bzw. er etwa gleich der doppelten Breite des Fußauftritts 17 ist, wie

- 10 -.

das die Fig. 1 und 5 erkennen lassen. In der eingefahrenen Stellung des Fußauftrittes 17 der ausfahrbaren Trittstufe 3, wie sie in den Fig. 1, 3 und 4 gezeigt ist, ragen daher die Profilschienen 15 und 16 etwa um ein Drittel ihrer Länge nach hinten über den Querholm 8 des Befestigungsrahmens 4 hinaus. Andererseits schließt die vordere Querkante des Fußauftritts 17 etwa bündig mit dem vorderen Querholm 7 des Befestigungsrahmens 4 ab.

In der ausgefahrenen Endstellung der ausfahrbaren Trittstufe 3 nach den Fig. 5 und 6 schließen die hinteren Enden der Profilschienen 15 und 16 etwa bündig mit dem hinteren Querholm 8 des Befestigungsrahmens 4 ab, während der eigentliche Fußauftritt 17 über dessen vorderen Querholm 7 wenigstens annähernd mit seiner gesamten Breite vorsteht.

Der maximale Verschiebeweg der beiden Profilschienen 15 und 16 sowie demnach auch des von diesen getragenen Fußauftritts 17 relativ zum Befestigungsrahmen 4 wird einerseits durch zwei elastische Puffer 18 an den vorderen Enden der Profilschienen 15 und 16 sowie andererseits durch zwei elastische Puffer 19 an den hinteren Enden dieser Profilschienen 15 und 16 eingegrenzt, wobei diese Puffer 18 und 19 innerhalb gewisser Grenzen in Längsrichtung der Profilschienen 15 und 16 verstellt und in jeder Einstelllage fixiert werden können.

Die Anordnung der elastischen Puffer 18 und 19 in den Profilschienen 15 und 16 ist dabei so getroffen, daß sie jeweils mit den in den Längsholmen des Befestigungsrahmens 4

- 11 -

um die ortsfesten Achsen 11 drehbar gelagerten Laufrollen 12 als Gegenanschläge zusammenwirken können.

Ein wesentliches Ausgestaltungsmerkmal der ausfahrbaren Trittstufe 3 liegt darin, daß an jeder Profilschiene 15 und 16 eine Zugfeder 20 und 21 mit ihrem einen Ende angreift, während ihr anderes Ende am hinteren Querholm 8 des Befestigungsrahmens 4 so verankert ist, daß beide Zugfedern in jeder möglichen Schiebestellung der Profilschienen 15 und 16 bzw. des Fußauftritts 17 eine im wesentlichen quer zur Verstellrichtung erstreckende Wirkrichtung und Vorspannung haben.

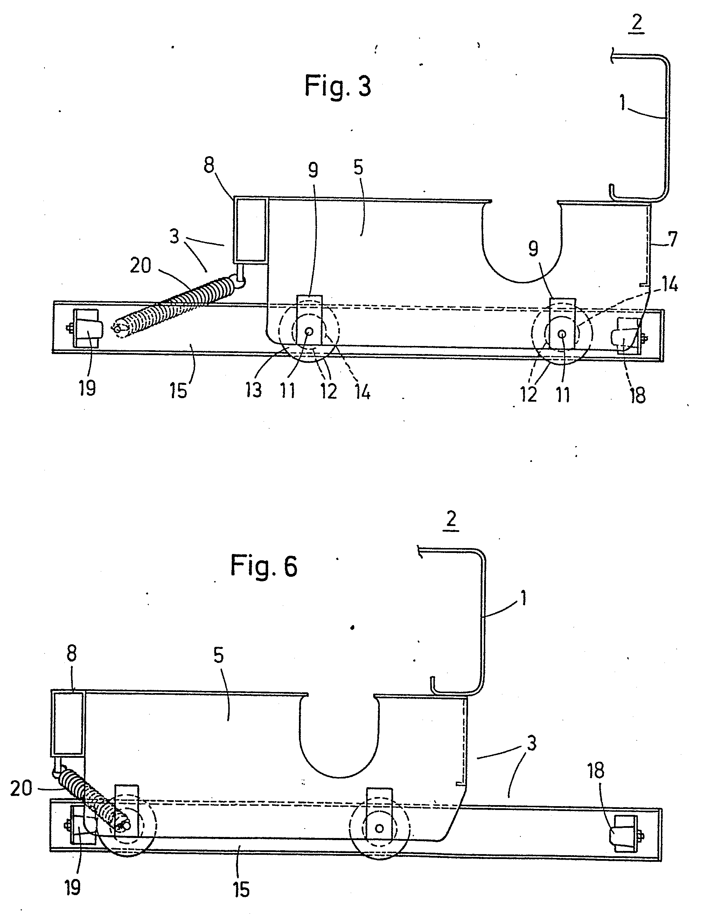

Die beiden Zugfedern 20 und 21 sind symmetrisch zu einer Längsmittelebene der Trittstufe 3 eingebaut, und zwar so, daß sie in der eingefahrenen Endstellung der Trittstufe 3 bzw. des Fußauftritts 17 nach den Fig. 1 und 3 zwischen der Profilschiene 15 und dem hinteren Querholm 8 bzw. der Profilschiene 16 und dem hinteren Querholm 8 eine spitzwinklige Neigungslage einnehmen, in der sie ihre maximale Vorspannung erreichen.

In der ausgefahrenen Endstellung der ausfahrbaren Trittstufe 3 bzw. des Fußauftritts 17 nach den Fig. 5 und 6 haben die Zugfedern 20 und 21 ebenfalls eine spitzwinklige Neigungslage zwischen der Profilschiene 15 und dem hinteren Querholm 8 bzw. der Profilschiene 16 und dem hinteren Querholm 8; jedoch nehmen sie in diesem Falle eine entgegengesetzte Neigungslage ein und weisen vorzugsweise auch noch eine etwas geringere Vorspannung auf als in der zuerst beschriebenen Stellung.

- 12 -

In einer bestimmten Zwischenstellung, die etwa bei halb
ausgefahrener, bzw. eingefahrener Trittstufe 3 bzw. Fußauftritt 17 erreicht ist, haben beide Zugfedern 20 und 21
ihre geringste Vorspannung sowie eine etwa parallel zum
hinteren Querholm 8 des Befestigungsrahmens 4 oder aber
rechtwinklig zu den Profilschienen 15 und 16 verlaufende
Wirklage.

Damit sich die Zugfedern 20 und 21 bei der Verstellung
der ausfahrbaren Trittstufe 3 bzw. des Fußauftritts 17
ungehindert relativ zum Befestigungsrahmen 4 und zu den
daran geführten Profilschienen 15 und 16 verlagern können, ist, wie die Fig. 3 und 6 deutlich zeigen, der hintere Querholm 8 des Befestigungsrahmens in einer Ebene
angeordnet, die oberhalb der Bewegungsebene der beiden
Profilschienen 15 und 16 bzw. des davon getragenen Fußauftritts 17 liegt. Damit wird erreicht, daß die beiden Zugfedern 20 und 21 in jedem Falle mit einer vom hinteren
Querholm 8 zu den Profilschienen 15 und 16 hin nach
abwärts geneigter Lage eingespannt sind. Sie können daher auf die Profilschienen 15 und 16 zugleich auch eine
Kraftkomponente ausüben, die geeignet ist, das Bewegungsspiel zwsichen den Laufrollen 12 und den Profilschienen
15 und 16 so zu beeinflussen, daß dem Entstehen von Klappergeräuschen entgegengewirkt wird.

Die Betätigung der ausfahrbaren Trittstufe 3 bzw. das Verstellen des von den Profilschienen 15 und 16 verfahrbar im
Befestigungsrahmen 4 gehaltenen Fußauftritts 17 wird
durch eine auf der Längsmittelebene der ausfahrbaren Trittstufe 3 angeordnete Kraftantriebsvorrichtung 23 bewirkt,

- 13 -

die gemäß Fig. 7 aus einem Schubspindelantrieb 24 und einem diesen konzentrisch umgebenden, elektrischen Getriebemotor 25 besteht. Die Kraftantriebsvorrichtung 23 ist dabei gemäß den Fig. 1, 4 und 6 mit ihrem gehäusefesten Ende 26 an einem Ausleger 27 aufgehängt, der mit dem hinteren Querholm 8 des Befestigungsrahmens 4 starr verbunden ist. Die zum Gehäuse 28 der Kraftantriebsvorrichtung 23 axial verstellbare Antriebsstange 29 greift hingegen am Fußauftritt 17 der ausfahrbaren Trittstufe 3 an, wie das die Fig. 1, 4 und 6 deutlich erkennen lassen.

Wichtig für einen kompakten Aufbau der Kraftantriebsvorrichtung 23 ist, daß die Welle 30 des Elektromotors 31 für den Schubspindelantrieb 24 als Hohlwelle ausgebildet ist und die Antriebsstange 29 des Schubspindelantriebs 24 axial verschiebbar aufnimmt. Ferner ist zu diesem Zweck zwischen der Welle 30 des Elektromotors dem hinteren Ende einer mit der Antriebsstange 29 über die Mutter 32 zur Bildung eines Schraubengetriebes 34 in Eingriff stehenden Gewindespindel 33 ein Planetengetriebe 35 eingebaut. Die Antriebsstange 29 ist al- Hohlstange ausgeführt, in die die Gewindespindel 33 des Schraubengetriebes 34 hineinragt. Auf diese Art und Weise wird ein Schubspindelantrieb geschaffen, der bei relativ kleiner Baulänge einen relativ großen Verstellweg ermöglicht.

Besonders vorteilhaft bei der als Schubspindelantrieb 24 ausgelegten Kraftantriebsvorrichtung 23 ist, daß jede Betriebsstellung desselben selbstsperrend ist und daß der relativ große Verstellweg mit hoher aber gleichmäßiger Stellgeschwindigkeit durchlaufen werden kann.

- 14 -

Ein anderes wichtiges Ausbildungsmerkmal der Kraftantriebsvorrichtung 23 wird darin gesehen, daß die Endschalter 36,
die den Stellweg des Schubspindelantriebs 24 begrenzen, unmittelbar im Gehäuse 28 desselben untergebracht sind und
mit Steuerstufen 37 und 38 am Umfang der Antriebsstange
29 zusammenwirken. Auf diese Art und Weise ist eine exakte
Steuerung des Stellweges für die Antriebsstange 29 gewährleistet.

Damit die gesamte Kraftantriebsvorrichtung 23 gegen Wassereintritt und Verschmutzung optimal geschützt wird, ist
vorgesehen, daß das Gehäuse 28 mit einem Schlauchüberzug
39 versehen und dessen ausfahrbare Antriebsstange 29 von
einem Faltenbalg 40 umgeben wird.

Auch die Zugfedern 20 und 21 können zur Vermeidung einer
Beeinträchtigung ihrer Wirkungsweise durch Fremdkörper
dadurch geschützt werden, daß sie eine ihren Gesamtquerschnitt  umgebende Schlauchumhüllung erhalten.

In Fig. 8 ist die Schaltungsanordnung dargestellt, über
welche der Elektromotor 31 der Kraftantriebsvorrichtung 23
bzw. des diese bildenden Schubspindelantriebs 24 gesteuert
werden kann.

Über einen Türkontaktschalter 41, der durch Öffnen und
Schließen der Schiebetür 42 geschlossen bzw. geöffnet werden kann, wird ein Relais 43 veranlaßt, einen Wechselkontakt 44 zwischen zwei möglichen Schaltstellungen umzulegen.
Bei geschlossener Schiebetür 42 ist gemäß Fig. 8 der Türkontaktschalter 41 geöffnet und das Relais 43 daher nicht

- 15 -

erregt. Der Wechselkontakt 44 nimmt daher die aus Fig. 8 ersichtliche Schaltstellung ein.

Wird die Schiebetür 42 geöffnet, dann schließt sich der Türkontaktschalter 41 und erregt das Relais 43, welches den Wechselkontakt 44 in die zweite Stellung bringt. Da der Endschalter 36' über die Antriebsstange 29 in der Geschlossenstellung gehalten ist, werden nunmehr zwei zueinander parallel geschaltete Relais 45 und 46 erregt, wobei das Relais 45 den Kontakt 47 in Schließstellung bringt, während das Relais 46 den Kontakt 48 schließt. Über den Kontakt 47 und den Kontakt 48 wird unter Zwischenschaltung der Spule 54 der Motor 31 mit dem Netz verbunden, so daß er anläuft und die Trittstufe 3 bzw. den Fußauftritt 17 aus der Stellung nach den Fig. 1, 3 und 4 bis in die Stellung gemäß den Fig. 5 und 6 ausfährt. In diesem Augenblick wird dann der Endschalter 36' geöffnet, weil die Antriebsstange 29 mit ihrer Schaltstufe 38 in seinen Bereich gelangt und er sich öffnen kann.

Zu Beginn der Stellbewegung der Antriebsstange 29 befand sich der Endschalter 36" im Bereich der Steuerstufe 37 der Antriebsstange 29 und damit in seiner geöffneten Stellung. Schon zu Anfang der Stellbewegung der Antriebsstange 29 wird er aber in seine Schließlage gebracht. Er zeitigt jedoch keine Wirkung, weil durch das Ansprechen des Relais 43 der Wechselkontakt 44 umgestellt wurde und daher eine Verbindung der beiden Relais 49 und 50 mit dem Netz nicht zustandekommt. Der durch das Relais 49 schließbare Kontakt 51 bleibt daher ebenso geöffnet, wie der durch das Relais 50 zu schließende Kontakt 52. Lediglich die Kontrollampe 53, welche den Ausfahrbetrieb die die ausfahrbare Trittstufe 3

- 16 -

signalisiert und auch deren ausgefahrenen Zustand ständig
anzeigt, wird durch den Endschalter 36" an das Netz gelegt und leuchtet damit auf.

Wird die Schiebetür 2 geschlossen, dann öffnet sich der
Türkontaktschalter 41. Das Relais 43 fällt ab und bringt
den Wechselkontakt 44 in seine Grundstellung zurück. Nunmehr
werden über den Wechselkontakt 44 und den geschlossenen
Endschalter 36" die beiden Relais 49 und 50 an Netz gelegt,
so daß die Schalter 51 und 52 in ihre Schließstellung gelangen. Über die Spule 54 wird nun der Elektromotor 31
wieder mit dem Netz verbunden, und zwar für die umgekehrte Antriebs-Drehrichtung.

Er bringt dann über den Schubspindelantrieb 24 bzw. dessen Antriebsstange 29 die ausfahrbare Trittstufe 3 aus
ihrer den Fig. 5 und 6 entsprechenden Stellung wieder
in die den Fig. 1, 3 und 4 entsprechenden Stellung zurück,
wobei die Steuerstufe 37 der Antriebsstange 29 in den
Bereich des Endschalters 36" gelangt und dieser sich öffnet. Die abfallenden Relais 49 und 50 öffnen die Kontakte 51 und 52 und trennen damit den Elektromotor 31 vom
Netz.

Abschließend sei noch erwähnt, daß bei der Stellbewegung
der ausfahrbaren Trittstufe 3 aus der zurückgefahrenen
Stellung nach den Fig. 1, 3 und 4 in Richtung der ausgefahrenen Stellung nach den Fig. 5 und 6 die Antriebswirkung des Schubspindelantriebs 24 zunächst, und zwar etwa
über den halben Stellweg, durch die beiden Zugfedern 20
und 21 unterstützt wird. Nach dem halben Stellweg gelangen die Zugfedern 20 und 21 dann kurzzeitig in eine neutrale

- 17 -

Stellung, während sei bei der weitergehenden Stellbewegung eine ständig steigende Hemmwirkung auf den Schubspindelantrieb 24 ausüben, bis dieser seine ausgefahrene Endstellung erreicht.

Die gleiche Wirkung, jedoch in umgekehrter Richtung, bringen die beiden Zugfedern 20 und 21 aber auch hervor, wenn die ausgefahrene Trittstufe 3 durch die Kraftantriebsvorrichtung 23 von ihrer ausgefahrenen Stellung nach den Fig. 5 und 6 in die eingefahrene Stellung nach den Fig. 1, 3 und 4 bewegt wird. Beim Anlaufen der Kraftantriebsvorrichtung 23 wird nämlich, etwa über den halben Stellweg, der Schubspindelantrieb 24 wirkungsmäßig zunächst unterstützt, während mit der zweiten Hälfte des Stellweges beginnend die Zugfedern 20 und 21 eine stetig ansteigende Bremskraft auf den Schubspindelantrieb 24 ausüben, bis dieser seine eingefahrene Endstellung erreicht hat.

Der dritte Endschalter 36' für den Elektromotor 31 des Schubspindelantriebs 24 kommt normalerweise nicht in den Wirkbereich der an der Antriebsstange 29 ausgebildeten beiden Steuerstufen 37 und 38. Er ist lediglich für den Fall vorgesehen, daß aus irgendwelchen Gründen einer der beiden anderen Endschalter 36' und 36" von den Steuerstufen unbeabsichtigt überfahren und dann in unerwünschter Weise wieder geschlossen wird. Gelangt der Endschalter 36"' in den Bereich irgendeiner der beiden Steuerstufen 37 und 38 dann wird er geöffnet und trennt den Elektromotor 31 vom Netz, so daß er nicht mehr weiterlaufen kann und Beschädigungen am Schubspindelantrieb 24, an dem diesem zugeordneten Planetengetriebe 35 oder auch am Elektromotor 31 sicher vermieden werden.

- 18 -

Abschließend sei noch erwähnt, daß der Türkontaktschalter 41 der Schaltungsanordnung nach Fig. 8 nicht unbedingt
zwischen der Schiebetür 42 und dem festen Rahmenholm wirksam werden muß. Er kann vielmehr auch unmittelbar dem jeweiligen Türgriff zugeordnet bzw. in diesen integriert
werden, so daß er schon beim Erfassen dieses Türgriffs
geschlossen oder geöffnet wird und damit die jeweiligen
Steuerungsabläufe auslöst. Der Vorgang des Aus- und Einfahrens der Trittstufe kann auf diese Art und Weise noch
wesentlich beschleunigt werden. Es ist dann nämlich möglich, den Bewegungsvorgang für die Trittstufe so ablaufen
zu lassen, daß sich diese bereits in ihrer ausgefahrenen
Stellung befindet, wenn die Einstiegstür ihre Öffnungs-
Endstellung erreicht hat.

Andererseits kann dann aber auch erreicht werden, daß die
Trittstufe ihre eingefahrene Endstellung schon in dem
Augenblick erreicht, in welchem auch die Einstiegstür
in ihre Schließlage gelangt.

- 19 -

## Patentansprüche

1. Ausfahrbare Trittstufe für Kraftfahrzeuge oder dergleichen, die am vorderen Ende zweier, z.B. im Querschnitt U- oder C-förmiger, Profilschienen sitzt und mittels dieser auf ortsfest gelagerten Laufrollen quer zu ihrer Längsrichtung verfahrbar abgestützt und geführt ist, wobei an der Trittstufe eine ortsfest verankerte Kraftantriebsvorrichtung mit Linearbewegung angreift,

   d a d u r c h   g e k e n n z e i c h n e t ,

   daß an jeder Profilschiene (15 und 16) eine Zugfeder (20 und 21) mit sich im wesentlichen quer zur Verstellrichtung der Trittstufe (3) erstreckender Wirkrichtung angreift, daß die ortsfesten Widerlager (8) für die Zugfedern (20 und 21) relativ zum Verstellweg der Trittstufe (3) eine Anordnung haben, bei welcher die Zugfedern (20, 21) in jeder der beiden Endstellungen der Trittstufe (3) eine gegen deren Verstellrichtung spitzwinklig geneigte Lage einnehmen (Fig. 1 und 5), und daß die Kraftantriebsvorrichtung (23) aus einem Schubspindelantrieb (24) mit diesen umgebendem, elektrischem Getriebemotor (25) besteht (Fig. 7).

2. Ausfahrbare Trittstufe nach Anspruch 1,

   d a d u r c h   g e k e n n z e i c h n e t ,

   daß der Schubspindelantrieb (24) auf der Mittel- bzw. Symmetrieebene zu den beiden Profilschienen (15 und 16) wirksam ist und daß das ortsfest (8) verankerte Ende der Zugfedern (20 und 21) dieser Mittel- bzw. Symmetrieebene näherliegt als deren an den Profilschienen (15 und 16) angreifende Ende (Fig. 1 und 5).

- 20 -

3. Ausfahrbare Trittstufe nach einem der Ansprüche
   1 und 2,
   d a d u r c h   g e k e n n z e i c h n e t,
   daß die Zugfedern (20, 21) von den ortsfesten
   Widerlagern (8) zu den Profilschienen (16 und 16)
   hin mit nach abwärts geneigter Lage eingespannt
   sind (Fig. 3 und 6).

4. Ausfahrbare Trittstufe nach einem der Ansprüche
   1 bis 3,
   d a d u r c h   g e k e n n z e i c h n e t,
   daß an beiden Enden der Profilschienen (15 und 16)
   Pufferorgane (18, 19), z.B. Gummipuffer, als Verstellwegbegrenzungen sitzen, denen die ortsfest gelagerten
   Laufrollen (12) jeweils als Gegenanschläge zugeordnet
   sind.

5. Ausfahrbare Trittstufe nach einem der Ansprüche 1
   bis 4,
   d a d u r c h   g e k e n n z e i c h n e t,
   daß einer (8) der beiden (7, 8) die als Laufrollenträger dienenden Längsholme (5, 6) miteinander verbindenden Querholme (7, 8) zugleich das ortsfeste
   Widerlager für die Zugfedern (20, 21) bildet und den
   Träger für die den Schubspindelantrieb (24) aufweisende Kraftantriebsvorrichtung (23) hält.

6. Ausfahrbare Trittstufe nach einem der Ansprüche 1
   bis 5,
   daß das Gehäuse (28) der den Schubspindelantrieb (24)
   aufweisenden Kraftantriebsvorrichtung (23) mit einem

- 21 -

Schlauchüberzug (39) versehen und dessen ausfahrbare
Antriebsstange (29) von einem Faltenbalg (40) umgeben
ist.

7. Ausfahrbare Trittstufe nach einem der Ansprüche
1 bis 6,
d a d u r c h   g e k e n n z e i c h n e t,
daß die Zugfedern (20, 21) von einem Schlauch umhüllt sind.

8. Ausfahrbare Trittstufe nach einem der Ansprüche
1 bis 7,
d a d u r c h   g e k e n n z e i c h n e t,
daß der Elektromotor (31) des Schubspindelantriebs
(24) einerseits über einen Türkontakt (41) bzw.
einen Türgriffkontakt betätigbar und andererseits
über der Antriebsstange (29) zugeordnete Endschalter (36 bzw. 36', 36", 36'") steuerbar ist.

9. Ausfahrbare Trittstufe nach einem der Ansprüche
1 bis 8,
d a d u r c h   g e k e n n z e i c h n e t,
daß die Welle (30) des Elektromotors (31) für den
Schubspindelantrieb (24) als Hohlwelle ausgebildet ist und die Antriebsstange (29) des Schubspindelantriebs (24) axialverschiebbar aufnimmt,
daß zwischen der Welle (30) des Elektromotors (31)
und der Eingangsseite eines mit der Antriebsstange
(29) gekuppelten, aus einer Mutter (32) und einer
Gewindespindel (33) bestehenden Raupengetriebes
(34) ein Planetengetriebe (35) sitzt, und daß die

- 22 -

Antriebsstange (29) eine Hohlstange ist, in die
die Gewindespindel (33) des Schraubengetriebes (34)
hineinragt (Fig. 7).

10. Ausfahrbare Trittstufe nach einem der Ansprüche
1 bis 9,
d a d u r c h   g e k e n n z e i c h n e t,
daß die Endschalter (36; 36', 36", 36'") im Gehäuse
(28) der den Schubspindelantrieb (24) aufweisenden
Kraftantriebsvorrichtung (23) sitzen und ihnen Steuerstufen (37, 38) am Umfang der Antriebsstange (29) zugeordnet sind (Fig. 7).

Fig. 1

Fig. 2

**Fig. 3**

**Fig. 6**

Fig. 4

Fig. 5

Fig. 7

73 91(
2. 3. (
0116923

## Fig. 8